# FASCICULE DE BREVET EUROPEEN

(11) **EP 3 044 913 B1**
(45) Date de publication et mention de la délivrance du brevet: **03.04.2019**
(21) Numéro de dépôt: 14761905.0
(22) Date de dépôt: 11.09.2014
(51) Int. Cl.: H04L 12/46, H04L 12/54

(54) **PROCEDE ET SYSTEME D'ETABLISSEMENT DE RESEAUX PRIVES VIRTUELS ENTRE RESEAUX LOCAUX**
VERFAHREN UND SYSTEM ZUM HERSTELLEN VIRTUELLER PRIVATER NETZWERKE ZWISCHEN LOKALBEREICHSNETZWERKEN
METHOD AND SYSTEM FOR ESTABLISHING VIRTUAL PRIVATE NETWORKS BETWEEN LOCAL AREA NETWORKS

(30) Priorité: 11.09.2013 FR 1358745
(43) Date de publication de la demande: 20.07.2016
(73) Titulaire: Citypassenger, 91940 Les Ulis (FR)
(72) Inventeur: DUVAL, Bruno, F-91976 Courtaboeuf Cedex (FR); TRUBLEREAU, Emmanuel, F-91940 Courtaboeuf Cedex (FR); FALEMPIN, Sven, F-91976 Courtaboeuf Cedex (FR)
(74) Mandataire: Regimbeau
(86) Numéro de dépôt international: PCT/EP2014/069454
(87) Numéro de publication internationale: WO 2015/036513

(56) Documents cités:
- EP-A2- 2 590 369
- CA-A1- 2 680 599
- US-A1- 2013 018 765
- HORI K ET AL: "AUTO-CONFIGURATION METHOD OF PROVISIONING SYSTEM FOR INTERNET VPNS", IEICE TRANSACTIONS ON COMMUNICATIONS, COMMUNICATIONS SOCIETY, TOKYO, JP, vol. E89B, no. 9, 1 septembre 2006 (2006-09-01), pages 2424-2433, XP001501559, ISSN: 0916-8516, DOI: 10.1093/IETCOM/E89-B.9.2424

## Description

### DOMAINE GENERAL

L'invention se rapporte au domaine des réseaux privés virtuels entre différents réseaux locaux.

### ETAT DE L'ART

On connaît de l'état de l'art des solutions pour créer des réseaux informatiques privés entre plusieurs sites distants, c'est-à-dire des réseaux informatiques dans lesquels la confidentialité des données est assurée.

Le document XP-001501559, par Hori et al., décrit un procédé pour établir un réseau privé virtuel entre plusieurs réseaux locaux. Sont sollicités dans le cadre du procédé du document des unités intégrant un module VPN (VPN routers), chaque unité étant comprise dans un réseau local respectif (user's network, etc.). Est également décrite dans le document une infrastructure comprenant un serveur de configuration (VPN management server).

Une solution connue pour mettre en place un réseau privé est le protocole MPLS (« Multi Protocol Label Switching » en anglais), protocole basé sur de la commutation d'étiquettes.

Cependant, l'installation d'un réseau MPLS est complexe et coûteuse car elle nécessite la mise en place d'un réseau physique dédié pour interconnecter des réseaux locaux.

Une solution alternative au MPLS consiste à mettre en place un réseau privé virtuel (« Virtual Private Network » en anglais, abrégé en VPN).

Un réseau VPN permet d'interconnecter deux réseaux locaux via un réseau de transmission public (typiquement le réseau Internet). Les données transmises entre deux machines de ces deux réseaux locaux sont encapsulées de façon chiffrée selon un protocole dit de « tunnelisation ».

Ainsi, un réseau VPN permet de faire communiquer des machines distantes avec le même niveau de sécurité des données que celui que l'on peut trouver dans un réseau local classique.

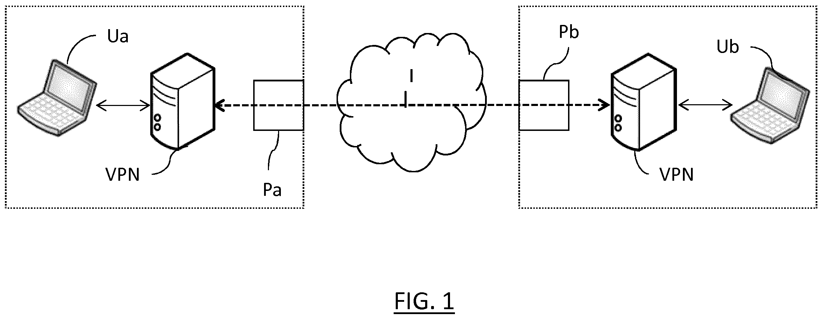

On a représenté en figure 1 un exemple de réseau privé virtuel entre deux réseaux locaux Ra et Rb. Chaque réseau local Ra, Rb comprend au moins un terminal Ua, Ub et une passerelle d'accès Pa, Pb à un même réseau public I.

Chaque passerelle Pa, Pb comprend typiquement une pluralité de ports et un pare-feu qui contrôle l'ouverture des ports par lesquels des données en provenance du réseau public sont autorisés à entrer dans le réseau local correspondant. Chaque passerelle est par exemple un boîtier ADSL multifonction communément appelé « box ADSL ».

Chaque réseau local Ra, Rb comprend en outre un module VPN pour chiffrer/déchiffrer des paquets selon le principe de tunnelisation précité.

Les deux modules VPN fonctionnement selon le modèle client/serveur. L'un des deux modules VPN est un client VPN émettant une requête d'authentification à l'autre module, qui est un serveur VPN. Si le client est correctement identifié par le serveur VPN, celui-ci crée un tunnel de chiffrement avec le client VPN (le tunnel est représenté sur la figure 1 par une flèche en pointillés).

Toutefois, dans un tel système, l'établissement d'un réseau virtuel nécessite une configuration préalable des réseaux locaux destinés à communiquer ensemble.

D'une part, le serveur VPN doit être préalablement configuré pour reconnaître une liste de clients VPN. Par ailleurs, les requêtes d'identification requièrent souvent l'ouverture de ports entrants particuliers du pare-feu côté serveur (typiquement le port 1194). La passerelle doit donc également faire l'objet d'une configuration.

D'autre part, l'établissement de la liaison VPN nécessite également une configuration côté client.

### PRESENTATION DE L'INVENTION

Un but de l'invention est de proposer un système de réseau privé virtuel entre des sites distants dont l'établissement ne requiert pas de configuration depuis chaque site.

Dans ce but, il est proposé, selon un premier aspect, un procédé d'établissement d'un réseau privé virtuel entre réseaux locaux, chaque réseau local comprenant au moins une passerelle d'accès à un réseau public et une unité comprenant un client VPN, le procédé comprenant les étapes suivantes réalisées à chaque mise sous tension d'une unité ;
- envoi par l'unité d'au moins un message de connexion à une infrastructure connectée au réseau public et comprenant au moins un serveur entremetteur, chaque message de connexion transitant par une passerelle respective du réseau local,
- réception par l'infrastructure de chaque message de connexion et détermination de données de topologie identifiant chaque passerelle du réseau local dans lequel l'unité est placée,
le procédé comprenant en outre les étapes suivantes réalisées pour une pluralité d'unités :
- Instanciation, par un serveur entremetteur prédéterminé de l'infrastructure, d'un serveur VPN associé à la pluralité d'unités,
- établissement d'un tunnel de chiffrement entre le serveur VPN et le client VPN de chaque unité à partir des données de topologie correspondantes,
- création et mémorisation de données de routage représentatives d'une règle de routage de données entre les tunnels de chiffrement établis.

Selon un deuxième aspect, il est proposé une infrastructure d'interconnexion pour établir un réseau privé virtuel entre plusieurs réseaux locaux comprenant chacun au moins une passerelle d'accès à un réseau public, l'infrastructure comprenant :
- au moins un serveur entremetteur, le ou chaque serveur entremetteur comprenant des moyens d'instanciation d'au moins un serveur VPN adapté pour établir au moins un tunnel de chiffrement avec au moins un client VPN localisé dans un réseau local distant,
- un contrôleur adapté pour transmettre une requête d'instanciation de serveur VPN au serveur entremetteur au moins prévu sur réception de données de topologie identifiant au moins une passerelle d'accès à un réseau public dans un réseau local distant,
- un routeur connecté au réseau public, au serveur entremetteur au moins prévu et au contrôleur, et comprenant des moyens de routage de données entre chaque serveur VPN instancié par le serveur entremetteur au moins prévu et des clients VPN localisés dans des réseaux locaux distants.

Selon un troisième aspect, il est proposé une unité d'interconnexion destinée à être connectée dans un réseau local comprenant au moins une passerelle d'accès à un réseau public pour établir un réseau privé virtuel avec au moins un autre réseau local distant ayant également accès au réseau public, l'unité comprenant :
- un module de traitement de données adapté pour générer des messages de connexion,
- Un module de communication réseau adapté pour communiquer les messages de connexion à une infrastructure d'interconnexion selon le deuxième aspect, par l'intermédiaire de chaque passerelle d'accès du réseau local, et
- un client VPN pour établir au moins un tunnel de chiffrement avec un serveur VPN distant.

Selon un quatrième aspect il est aussi proposé un système d'interconnexion pour établir un réseau privé virtuel entre au moins deux réseaux locaux, le système comprenant une infrastructure selon le deuxième aspect et aux moins deux unités selon le troisième aspect, dans lequel chaque unité comprend un module de stockage d'un identifiant de groupe d'unités interconnectables, chaque serveur entremetteur de l'infrastructure étant associé à un identifiant de groupe spécifique.

Un premier avantage de l'invention est qu'elle propose une solution automatique pour établir un réseau virtuel privé entre site distants tout en assurant une confidentialité des données échangées entre les réseaux locaux interconnectés.

Un deuxième avantage de l'invention réside dans son indépendance vis-à-vis des passerelles d'accès présentes dans les réseaux locaux. Le remplacement ou la reconfiguration d'une passerelle d'accès est pris en charge de façon transparente, sans besoin de reconfiguration supplémentaire de l'unité correspondante.

Un troisième avantage de l'invention est la gestion automatique d'accès multiples au réseau public en garantissant une haute disponibilité.

L'invention est avantageusement complétée par les caractéristiques suivantes, prises seules ou en une quelconque de leurs combinaisons techniquement possibles :
- les données de topologie comprennent au moins une adresse IP publique, chaque adresse IP publique identifiant une passerelle du réseau local correspondant depuis le réseau public ;
- l'étape d'envoi est réalisée périodiquement ;
- les étapes d'envoi et de réception de messages de connexion sont réalisées selon le protocole HTTPS sur présentation d'un certificat mémorisé dans chaque unité.
- l'étape d'établissement d'un tunnel de chiffrement comprend les sous-étapes de création de plusieurs sous-tunnels de chiffrement, chaque sous-tunnel correspondant à une route passant par une passerelle d'accès spécifique d'un réseau local, et d'agrégation des sous-tunnels en un tunnel de chiffrement.
- le serveur entremetteur réalisant l'instanciation du serveur VPN est déterminé par un identifiant de groupe d'unités interconnectables contenu dans les messages de connexion.

### BREVE DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1, déjà discutée, représente de manière schématique un système pour établir un réseau privé virtuel.
- La figure 2 représente de manière schématique un système d'interconnexion entre plusieurs réseaux locaux conforme à un mode de réalisation de l'invention.
- La figure 3 représente de manière schématique une unité selon un mode de réalisation de l'invention.
- La figure 4 représente de manière schématique une infrastructure d'interconnexion selon un mode de réalisation de l'invention.
- La figure 5 est un organigramme d'étapes d'un procédé d'établissement d'un réseau privé virtuel selon un mode de réalisation de l'invention.
- La figure 6 représente les sous-étapes d'une étape par ailleurs représentée sur la figure 5.

Sur l'ensemble des figures, les éléments similaires portent des références identiques.

### DESCRIPTION DETAILLEE DE L'INVENTION

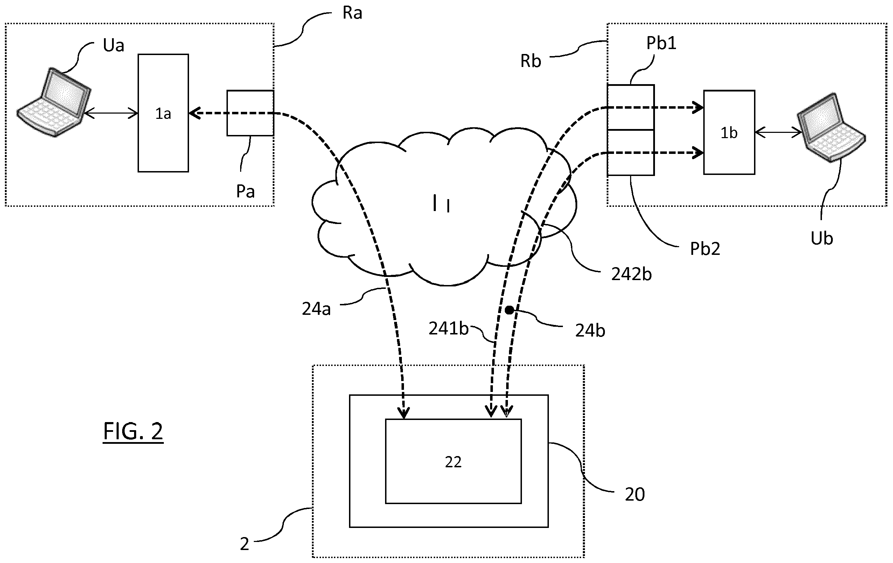

En référence aux figures 2 à 4, un premier réseau local Ra et un deuxième réseau local Rb distants sont à relier ensemble via une connexion de type réseau privé virtuel.

Chaque réseau local comprend au moins une passerelle d'accès Pa, Pb à Internet et au moins un terminal Ua, Ub connecté à au moins une passerelle d'accès.

Chaque passerelle Pa, Pb1, Pb2 d'accès dispose d'une adresse IP locale visible depuis chaque terminal présent dans le réseau local correspondant et d'une adresse IP publique visible depuis le réseau Internet.

Dans l'exemple illustré en figure 2 le premier réseau local Ra comprend une première passerelle d'accès Pa à un réseau public et un deuxième réseau local comprend une paire de deuxièmes passerelles Pb1, Pb2 d'accès au réseau public.

Une unité 1a, 1b d'interconnexion est placée dans chaque réseau local.

Chaque unité 1a, 1b comprend des moyens de communication réseau 12 adaptés pour communiquer avec au moins une des passerelles d'accès du réseau local dans lequel l'unité est placée.

Chaque unité 1a, 1b comprend également des moyens de stockage 14, tels qu'une mémoire flash ou EEPROM, ainsi qu'un module de traitement de données 10, par exemple un processeur. Chaque unité est en outre configurée pour exécuter au moins un client VPN 16.

Une infrastructure 2 d'interconnexion distincte des réseaux locaux Ra, Rb, est également connectée à Internet.

L'infrastructure 2 forme un réseau local comprenant au moins un serveur entremetteur 20. Chaque serveur entremetteur 20 comprend des moyens d'instanciation d'au moins un serveur VPN configuré pour établir un tunnel de chiffrement avec une pluralité de clients VPN distants.

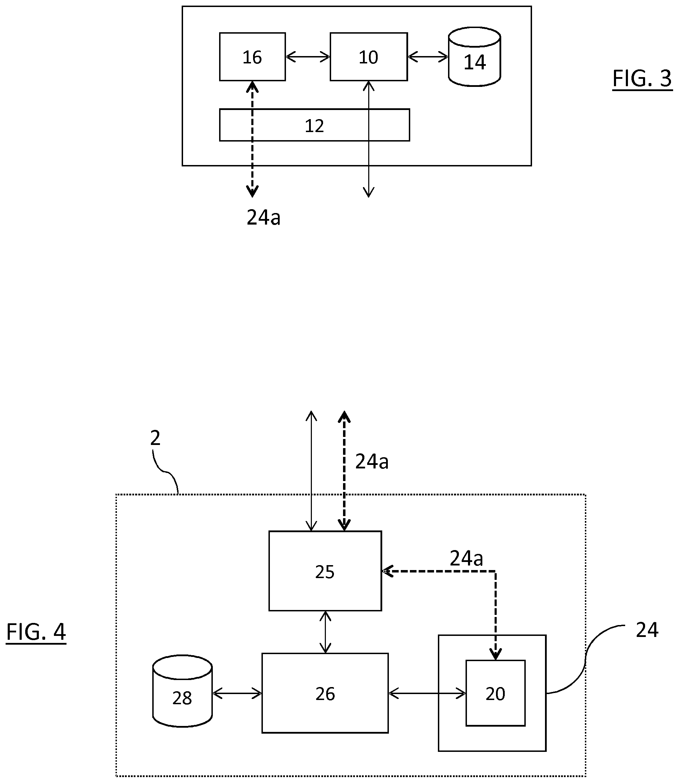

Dans un mode de réalisation illustré en figure 4, l'infrastructure 2 comprend un routeur 25, un contrôleur 26 et un virtualiseur 24 et une base de données 28.

### Routeur

Le routeur 25 assure une fonction de passerelle d'accès à Internet pour l'infrastructure 2. Le routeur 25 dispose d'une seule adresse IP publique visible depuis Internet.

Le routeur 25 assure le routage de données reçues depuis Internet vers chaque serveurs entremetteur 20 disposant d'une adresse IP spécifique dans le réseau local de l'infrastructure 2, par exemple par translation d'adresse (NAT) et/ou routage à la source (« source routing »). Le routeur 25 assure par ailleurs le routage de requêtes émanant d'unités vers le contrôleur 26.

Le routeur 25 comprend également un pare-feu qui contrôle l'ouverture de ports d'accès à l'infrastructure 2.

### Virtualiseur

Le virtualiseur 24 comprend une machine virtuelle (ou hyperviseur) adaptée pour exécuter au moins un système d'exploitation. Chaque serveur entremetteur 20 est un système d'exploitation exécuté par le virtualiseur 24, chaque système d'exploitation étant isolé des autres systèmes d'exploitation.

Le virtualiseur 24 est configuré pour instancier dynamiquement les serveurs entremetteurs, surveiller leur état de fonctionnement et/ou les supprimer.

Chaque serveur entremetteur 20 instancié (également appelé « central ») est identifié par une adresse IP privée unique dans l'infrastructure 2. Chaque serveur comporte une pluralité de ports logiques par lesquels des données émanant du routeur 25 peuvent être reçues. A titre d'exemple est représenté sur la figure 4 un tunnel de chiffrement 24a établi avec l'unité 1a selon un procédé qui sera décrit plus loin dans le présent document.

Par exemple, le virtualiseur 24 peut comprendre un système d'exploitation hôte FreeBSD®, et la machine virtuelle être de type KVM® ou QEMU®. En variante la machine virtuelle est un ensemble de BSD Jails® permettant de compartimenter les serveurs entremetteurs les uns des autres dans le système d'exploitation FreeBSD®.D'autres types d'isolation sont valides. Il est par exemple posible d'utiliser de la virtualisation légère de type Jail ou openVZ.

Chaque serveur entremetteur 20 peut être un système d'exploitation esclave de type NanoBSD®, et chaque serveur VPN instancié être un démon OpenVPN® exécuté en arrière-plan du système d'exploitation esclave NanoBSD® correspondant.

### Contrôleur

Le contrôleur 26 est connecté au routeur 25, et aux serveurs entremetteurs et à la base de données 28. Le contrôleur 26 dispose d'une adresse IP dans le réseau de l'infrastructure 2.

Si l'infrastructure 2 dispose d'un nom de domaine de deuxième niveau, par exemple « mydomainname.com », le contrôleur 26 peut par ailleurs disposer d'un nom de sous-domaine, par exemple « controller.mydomainname.com ».

Le contrôleur 26 est également configuré pour surveiller le fonctionnement des serveurs entremetteurs et détecter un serveur entremetteur 20 défaillant.

Le contrôleur 26 communique par ailleurs avec chaque unité d'interconnexion mise sous tension, par l'intermédiaire du routeur 25. Les communications entre chaque unité 1a, 1b et le contrôleur 26 sont de préférence assurées par le protocole HTTPS sur présentation d'un certificat préalablement stocké dans chaque unité.

Le contrôleur 26 est également configuré pour générer des messages d'événements et enregistrer ces messages dans un journal dans la base de données 28.

### Etablissement d'un réseau privé virtuel

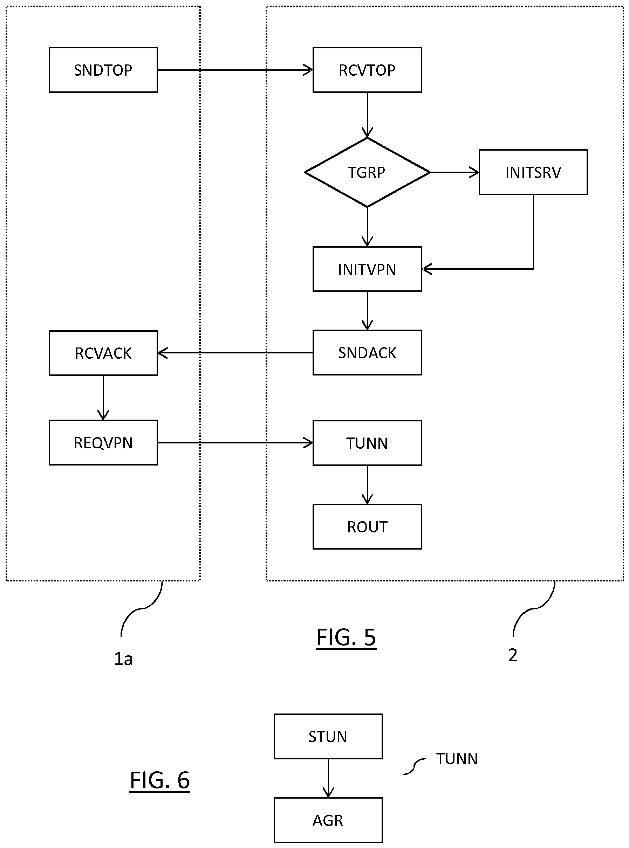

En référence à la figure 5, l'établissement d'un réseau privé virtuel comprend les étapes suivantes réalisées pour une première unité (par exemple, l'unité 1a du premier réseau local).

Dans une étape SNDTOP, l'unité 1a envoie au contrôleur 26 de l'infrastructure 2 au moins un message de connexion, chaque message de connexion transitant pas une passerelle respective du réseau dans lequel l'unité 1a est placée (ici, le réseau local Ra ne comporte qu'une seule passerelle Pa, un seul message est donc émis l'unité 1a).

Ce message est envoyé à travers chaque passerelle et possiblement sur une liste de ports différents afin de découvrir un port ouvert. Ce mécanisme permet de pouvoir découvrir et utiliser un autre port que le port par défaut (port 1194).

L'adresse du contrôleur 26 destinataire est déterminée et connue de chaque unité 1a, 1b. Cette adresse peut être mémorisée dans les moyens de stockage 14 avant la première mise sous tension d'une unité dans un réseau local. L'adresse peut être l'adresse IP du contrôleur 26, ou de préférence le nom de domaine du contrôleur 26, qui permet de rendre transparent tout changement d'adresse IP du contrôleur 26.

Dans une étape de réception RCVTOP, le contrôleur 26 reçoit l'au moins un message de connexion, et détermine en conséquence la topologie du réseau Ra dans lequel l'unité 1a est placée. La topologie identifie notamment quelles sont les passerelles d'accès à Internet du réseau local Ra dans lequel l'unité 1a est placée. La topologie comprend notamment, pour chaque passerelle par laquelle a transité un message de connexion respectif (ici la passerelle Pa), une adresse IP publique et une adresse IP privée dans le réseau local Ra.

Les mêmes étapes sont réalisées pour l'unité 1b d'interconnexion mise sous tension dans le réseau local Rb.

La topologie de chaque réseau local est ainsi déterminée sans effectuer de connexions entrantes dans chaque réseau local depuis le réseau public I.

Dans une étape INITVPN, le serveur entremetteur 20 instancie un serveur VPN 22. Cette étape INITVPN peut être réalisée après la détermination des données de topologies d'un premier réseau (par exemple Ra), ou bien après la détermination des données topologies de plusieurs réseaux (Ra et Rb).

Plus précisément, le contrôleur 26 détermine un serveur entremetteur 20 à utiliser et lui transmet une requête d'instanciation. Le serveur entremetteur 20 choisi par le contrôleur 26 démarre alors une instance de serveur VPN 22, et retourne une notification de démarrage au contrôleur 26. Le contrôleur 26 peut ensuite émettre une notification à l'unité ayant émis le message de contrôle dans une étape SNDACK pour signifier à l'unité qu'un serveur VPN 22 est prêt à être utilisé.

L'unité reçoit dans une étape RCVACK la notification de démarrage.

Est ensuite établi, dans une étape TUNN, un tunnel de chiffrement 24a entre le serveur VPN 22 instancié et l'unité 1a. Cette étape est mise en oeuvre de manière conventionnelle. Le tunnel de chiffrement 24a peut classiquement être établi par les étapes suivantes: requête émise par le client VPN 16 de l'unité 1a au serveur VPN 22 instancié, création du tunnel 24a par le serveur VPN 22 et renvoi par le serveur VPN 22 d'une notification au client VPN 16. A l'issue de cette étape TUNN, l'unité 1a se voit attribuer une adresse IP virtuelle par le serveur 22.

L'étape TUNN est également réalisée pour établir un tunnel de chiffrement 24b entre le serveur VPN 22 et l'unité 1b.

Dans une étape ROUT, des données de routage représentatives d'une règle de routage entre le premier tunnel 24a, 24b de chiffrement et le deuxième tunnel 24a, 24b de chiffrement sont ensuite créées puis mémorisées dans la base de données 28.

Un réseau privé virtuel est alors établi entre les réseaux locaux Ra et Rb.

L'étape ROUT de création/mémorisation est réalisée pour chaque nouvelle unité enregistrée auprès de l'infrastructure 2, suite à sa mise sous tension dans un réseau local respectif. Si N unités ont déjà été mises sous tension, et que N tunnels de chiffrement respectifs ont été créés, l'étape ROUT de nouvelles règles de routage entre le dernier tunnel de chiffrement créé et les tunnels de chiffrement précédemment créés.

Est mémorisé dans les moyens de stockage 16 un programme comprenant des instructions de code pour l'exécution des étapes décrites ci-dessus réalisées par l'unité, lorsque ce produit programme est exécuté par le module de traitement de données.

Le programme peut être typiquement un script exécuté à la mise sous tension de chaque unité.

L'étape d'envoi SNDTOP de messages de connexion est de préférence répétée dans le temps, par exemple périodiquement, après la mise sous tension de chaque unité. Ceci permet alors à l'infrastructure de détecter des changements de topologie dans chaque réseau local, sans que cette infrastructure ne réalise de connexion entrante dans les réseaux locaux.

Un changement de topologie peut par exemple consister en un changement de nombre de passerelles en état de fonctionnement dans le réseau local (mise sous tension d'une nouvelle passerelle ou extinction d'une passerelle existante) ou le changement d'un paramètre associé à une passerelle (par exemple, changement de l'adresse IP publique d'une passerelle).

### Routage des données entre unités interconnectées

Un paquet de données utiles émis par un premier terminal Ua du premier réseau local Ra à destination d'un deuxième terminal Ub du deuxième réseau Rb est d'abord chiffré par le premier client VPN 16 de la première unité, puis envoyé au serveur VPN 22 par le tunnel 24a correspondant. Le paquet est déchiffré par le premier serveur VPN 22, transmis au deuxième. Le paquet est ensuite chiffré à nouveau par le serveur VPN 22, et envoyé via le tunnel 24b après examen de la règle de routage établie lors de l'étape ROUT au deuxième client VPN 16 de l'unité 1b, lequel déchiffre le paquet avant de le transmettre au terminal destinataire Ub.

### Détails concernant l'établissement d'un tunnel de chiffrement

Dans un mode de réalisation, le tunnel de chiffrement est établi à l'aide de plusieurs certificats numériques.

Un certificat numérique intervient dans le cadre d'une communication entre deux entités dans un réseau. Il permet de « signer » les données de gestion par une première entité à une autre entité. Ainsi, cette autre entité sait que les données qu'elle reçoit du réseau proviennent d'une entité fiable.

Un premier certificat numérique est mémorisé dans les moyens de stockage 14 de chaque unité 1a, 1b, avant son installation dans le réseau local correspondant Ra, Rb, au cours d'une étape de pré-configuration en usine.

Ce premier certificat est utilisé pour authentifier chaque unité 1a, 1b auprès de l'infrastructure. Il permet de sécuriser la transmission des données de gestion décrites précédemment (données de topologie, etc.) entre l'unité 1a, 1b et le serveur entremetteur, avant la création du tunnel de chiffrement, ce dernier étant destiné à transportant des données utiles entre deux terminaux de deux réseaux locaux distants Ra, Rb.

Sur réception d'un message d'inscription signé par une unité d'interconnexion, disons 1a, à l'aide de son premier certificat, le contrôleur vérifie si l'unité 1a est connue du système.

Si tel est le cas, le contrôleur commande la génération d'un deuxième certificat (deuxième niveau de sécurité), différent du premier.

Le contrôleur transmet ensuite le deuxième certificat ainsi généré à l'unité 1a.

Le tunnel de chiffrement 24a en tant que tel est créé à la demande de l'unité 1a, à l'aide du deuxième certificat numérique qu'elle a reçu du contrôleur, de façon conventionnelle.

Les mêmes étapes sont effectuées pour créer le tunnel de chiffrement 24b entre le serveur entremetteur et l'unité 1b.

Le premier certificat est spécifique à chaque unité 1a, 1b, de façon à pouvoir distinguer les différentes unités dans le système.

Si deux machines (unités) utilisant le même premier certificat numérique sont détectées par le contrôleur, ce premier certificat en doublon peut être révoqué.

En revanche, il peut être prévu que le deuxième certificat numérique généré soit le même pour tous les tunnels 24a, 24b créés pour interconnecter les unités 1a, 1b appartenant à un même groupe.

La génération du deuxième certificat numérique peut être mise en oeuvre par le contrôleur lui-même.

Toutefois, dans une architecture plus décentralisée, la génération du deuxième certificat numérique est mise en oeuvre par une entité tierce (PKI) extérieure à l'infrastructure 2 (c'est-à-dire une entité accessible par l'infrastructure en passant par le réseau public I).

Confier la génération de ce deuxième certificat numérique à une entité extérieure améliore la sécurité du VPN, car ce deuxième certificat n'est jamais stocké dans l'infrastructure 2 (cette dernière faisant simplement office de relai entre l'entité tierce et l'unité 1a).

Dans ce cas, le contrôleur s'authentifie auprès de cette entité tierce au moyen d'un troisième certificat (certificat « root »), préalablement mémorisé par le contrôleur.

Ce troisième certificat permet en l'occurrence de sécuriser les communications entre le contrôleur et l'entité tierce, et apporte par conséquent encore un niveau supplémentaire de sécurité au système.

Il peut être prévu un troisième certificat par serveur entremetteur instancié. Dans ce cas, avant sa mise en service, il est stocké dans le contrôleur une liste prédéterminée de certificats « root ». A chaque fois qu'un nouveau serveur entremetteur est instancié, un nouveau certificat « root » lui est associé par le contrôleur.

Prévoir une pluralité de certificats « root » permet d'isoler les différents groupes d'unités interconnectables sur le plan de la sécurité.

### Agrégation de tunnels de chiffrement

En référence à la figure 6, l'étape d'établissement TUNN d'un tunnel de chiffrement avec un réseau local comportant plusieurs passerelles d'accès peut comprendre les sous-étapes de création STUN de plusieurs sous-tunnels de chiffrement, chaque sous-tunnel correspondant à une route passant par une passerelle d'accès spécifique d'un réseau local, et d'agrégation AGR des sous-tunnels en un tunnel de chiffrement.

Chaque route de sous-tunnel peut être associée à un port particulier du routeur 25 de l'infrastructure 2.

Dans un mode de réalisation mettant en oeuvre une commutation de paquets, les différents sous-tunnels sont sollicités pour transmettre différents paquets en parallèle. Cette technique permet d'augmenter la bande passante maximale d'un réseau local.

Le deuxième réseau local représenté en figure 2 comprend deux passerelles d'accès Pb1, Pb2 à Internet connectées à la deuxième unité d'interconnexion 1b. La topologie déterminée par le boîtier contient donc les adresses IP publiques respectives de ces deux passerelles. Deux sous-tunnels 241a, 242b de chiffrement sont établis au cours de l'étape TUNN, laquelle est suivie par l'étape d'agrégation AGR pour créer un tunnel 24b commun entre le réseau local Rb et le serveur VPN 22.

### Interconnexion d'unités appartenant à un même groupe

Dans un mode de réalisation, chaque unité d'interconnexion fait partie d'un groupe de boîtiers à interconnecter. Par exemple, un groupe d'unités peut correspondre à un ensemble de sites d'une même entreprise, chaque unité étant placée dans le réseau local d'un site respectif de l'entreprise.

Est alors stocké dans les moyens de stockage de chaque unité un identifiant de groupe prédéterminé. Par ailleurs, chaque serveur entremetteur 20 se voit attribuer un identifiant de groupe spécifique. Une table de correspondance associant des identifiants de groupe et des serveurs entremetteurs est mémorisée dans base de données 28.

L'unité de traitement de données 10 de chaque unité lit alors l'identifiant de groupe stocké par l'unité et l'insère dans chaque message de connexion envoyé au cours de l'étape SNDTOP. Par ailleurs, le contrôleur détermine dans une étape TGRP un serveur entremetteur 20 à utiliser en fonction de l'identifiant de groupe reçu. Pour ce faire, le contrôleur recherche dans la table d'association une instance de serveur entremetteur 20 associée avec ce même identifiant de groupe.

Si aucun serveur entremetteur 20 n'est trouvé dans la table de correspondance, le contrôleur 26 envoie une requête d'instanciation d'un nouveau serveur entremetteur 20 au virtualiseur 24, le virtualiseur 24 instancie dans une étape INITSRV un nouveau serveur entremetteur 20, et une notification est retournée au contrôleur 26.

Si l'instanciation s'est déroulée avec succès, une nouvelle entrée associant l'instance de serveur créée à l'identifiant de groupe reçu du boîtier est sauvegardée dans la base de données 28.

Le contrôleur 26 transmet ensuite au serveur entremetteur 20 la topologie reçue du boîtier.

Au démarrage du virtualiseur 24, aucun serveur entremetteur 20 n'est instancié ; un nouveau serveur entremetteur 20 est instancié après chaque mise sous tension d'un boîtier appartenant à un nouveau groupe.

Dans un mode de réalisation, chaque unité peut également stocker un identifiant de site unique. L'identifiant de site peut être prédéterminé, c'est-à-dire mémorisé dans les moyens de stockage 14 de chaque unité avant sa mise sous tension dans un réseau local.

L'identifiant de site est également inséré dans la topologie envoyée à l'infrastructure 2 d'interconnexion par l'unité, dans l'étape SNDTOP.

Un tel identifiant de site permet à l'infrastructure 2 d'identifier de manière certaine chaque unité 1a, 1b, même si la topologie d'un réseau local Ra, Rb est modifiée (changement d'adresse IP publique d'une passerelle d'accès, par exemple).

Chaque topologie reçue peut être par ailleurs sauvegardée dans la base de données 28 de l'infrastructure 2. Par exemple, seule la dernière valeur de topologie reçue d'un boîtier est sauvegardée.

Dans la base de données 28, les topologies peuvent être stockées de manière hiérarchisée, par exemple dans le format JSON (JavaScript Object Notation): un objet « groupe » est associé à un identifiant de groupe et contient plusieurs objets « sites ». Chaque objet « site » est associé à un identifiant de site et contient les données représentatives de la topologie d'un réseau local correspondant.

### Authentification des unités par certificat

De préférence, un certificat numérique est mémorisé dans les moyens de stockage 16 de chaque unité, avant sa mise en service.

Chaque certificat peut d'une part être utilisé pour authentifier une unité auprès du contrôleur 26. Toutes les communications entre une unité et le contrôleur 26 peuvent alors être assurées par le protocole HTTPS sur présentation du certificat correspondant, lequel est envoyé au contrôleur 26 au cours de l'étape SNDTOP avec ou sans la topologie.

Chaque certificat peut disposer d'une durée de validité limitée, et le contrôleur 26 être configuré pour vérifier la date de la validité lors de l'étape de réception RCVTOP de la topologie.

Si le certificat est obsolète, le contrôleur 26 peut transmettre un nouveau certificat à l'unité l'ayant envoyé.

Chaque certificat peut également être utilisé pour authentifier une unité auprès d'un serveur entremetteur 20, dans le cadre de la création d'un tunnel 24a, 24b de chiffrement entre le client VPN de cette unité et un serveur VPN 22 instancié par le serveur entremetteur 20.

### Surveillance des serveurs entremetteurs par le contrôleur

Le contrôleur 26 peut surveiller le bon fonctionnement du virtualiseur 24 et de chaque serveur entremetteur 20 instancié. Une étape de surveillance est donc répétée dans le temps par le contrôleur 26, par exemple périodiquement. Cette étape de surveillance peut comprendre une vérification qu'un port TCP d'activation de chaque serveur entremetteur 20 instancié est ouvert.

Si un serveur entremetteur 20 ne répond pas en un temps prédéterminé, il est considéré comme défaillant ; le contrôleur 26 adresse au virtualiseur 24 une requête de redémarrage déclenchant un redémarrage du serveur entremetteur 20 considéré défaillant.

Pour créer à nouveau l'ensemble des tunnels de chiffrement interrompus sur un serveur entremetteur 20 redémarré, l'étape SNDTOP peut être réalisée de façon répétée par chaque unité, par exemple périodiquement. Le contrôleur 26 peut alors déterminer l'ensemble des topologies associées aux unités appartenant au groupe géré par le serveur entremetteur 20 redémarré.

Chaque serveur entremetteur 20 peut être exécuté en lecture seule dans le virtualiseur 24. En d'autres termes, chaque serveur entremetteur 20 ne réalise aucune écriture de données dans le virtualiseur 24 même, mais peut toutefois accéder en écriture à la base de données 28.

### Administration des réseaux privés virtuels créés

L'infrastructure 2 peut en outre comprendre une interface d'administration (non illustrée). L'interface d'administration peut comprendre un serveur HTTP et un site web accessible depuis un terminal tiers externe à l'infrastructure 2.

L'interface d'administration est accessible à l'aide d'une classique paire d'identifiant et de mot de passe.

L'interface d'administration permet en outre de modifier des règles de pare-feu configurées dans le routeur 25 par groupes ou par sous-groupes.

Chaque unité peut par ailleurs comprendre une interface utilisateur. L'interface utilisateur peut typiquement être affichée sur un écran de l'unité et/ou sur un terminal tiers par l'intermédiaire d'un serveur HTTP de l'unité donnant accès à des pages web mémorisées dans les moyens de stockages de l'unité.

L'interface utilisateur peut comprendre des informations de statut qui renseignent sur l'état courant de l'unité, et notamment :
- la topologie détectée, par exemple présentée sous forme d'une liste de passerelles d'accès ;
- Des informations relatives aux tunnels créés,
- Des informations d'agrégation de sous-tunnels.

L'interface utilisateur peut également comprendre des boutons permettant de réaliser les actions suivantes sur l'unité : redémarrage de l'unité, exécution de l'étape de détection de topologie DTOP, etc.

### AUTRES VARIANTES

Le contrôleur 26, le virtualiseur 24 et le routeur 25 peuvent être regroupés au sein d'un serveur physique commun, ou bien constituer des serveurs physiques distincts dans l'infrastructure 2.

Chaque serveur entremetteur 20 peut être embarqué dans un virtualiseur 24 ou bien constituer un serveur physique spécifique dans l'infrastructure 2.

La base de données 28 peut être stocké dans un serveur de données distinct ou bien être stockée dans un des éléments de l'infrastructure 2 tel que le contrôleur 26.

Dans le mode de réalisation illustré en figure 2, chaque unité est un boîtier physique indépendant destiné à être connecté à un réseau local.

En variante, chaque unité est formée par un terminal d'un réseau local sur lequel est installé un programme comprenant un client VPN, le programme étant configuré pour mettre en oeuvre les étapes réalisées côté unité telles que décrites précédemment. Dans cette variante de réalisation, la configuration de l'unité consiste à installer le programme réalisant les étapes du procédé d'établissement décrit dans les moyens de stockage du terminal utilisé comme unité.

L'infrastructure 2 peut être utilisée pour mettre à disposition des réseaux locaux interconnectés des services supplémentaires. Chaque serveur entremetteur 20 peut à ce titre héberger une passerelle SMS, un serveur DHCP, un serveur RADIUS (« Remote Authentication Dial-In User Service »), etc.

Le système décrit précédemment offre de multiples avantages, dont les suivants :
- Haute sécurité de l'architecture globale,
- livraison de boîtiers préconfigurés en usine "plug & play" / Industrialisation des déploiements.
- reconnaissance automatique de la topologie et gestion automatique des multi-accès xDSL Internet (haute disponibilité et répartition de charge, ou « load balancing » en anglais, sans aucune configuration nécessaire côté client),
- Indépendance vis-à-vis des passerelles en place (la box peut être remplacée de manière transparente)
- l'IP publique de chaque réseau local peut être variable
- Montage automatique de VPN redondés entre les machines d'un même groupe
- Montage automatique d'un réseau de supervision et de management sécurisé
- Étanchéité et indépendance des groupes de sites connectés
- Accès à de nombreux services via l'infrastructure : serveur de log, Filtrage d'URL, passerelle (« gateway ») SMS, serveur Radius, serveur de sauvegardes...
- Remplacement des unités en cas de panne facilité (la nouvelle unité télécharge la configuration de l'ancienne lors de son installation)
- Souplesse et élasticité de l'architecture : l'infrastructure peut gérer plusieurs groupes de sites, chaque groupe étant administré de façon indépendante ; toutefois, l'infrastructure peut être installé dans une zone démilitarisée (DMZ) d'un des réseaux locaux interconnectés.

## Revendications

1. Procédé d'établissement d'un réseau privé virtuel entre réseaux locaux (Ra, Rb), chaque réseau local (Ra, Rb) comprenant au moins une passerelle (Pa, Pb1, Pb2) d'accès à un réseau public (I) et une unité (1a, 1b) comprenant un client VPN (16), le procédé comprenant les étapes suivantes réalisées à chaque mise sous tension d'une unité (1a, 1b) ;
- envoi (SNDTOP) par l'unité (1a, 1b) d'au moins un message de connexion à une infrastructure (2) connectée au réseau public (I) et comprenant au moins un serveur entremetteur (20), chaque message de connexion transitant par une passerelle respective (Pa, Pb1, Pb2) du réseau local (Ra, Rb),
- réception (RCVTOP) par l'infrastructure (2) de chaque message de connexion et détermination de données de topologie identifiant chaque passerelle (Pa, Pb1, Pb2) du réseau local (Ra, Rb) dans lequel l'unité (1a, 1b) est placée,
le procédé comprenant en outre les étapes suivantes réalisées pour une pluralité d'unités (1a, 1b) :
- instanciation (INITVPN), par un serveur entremetteur (20) prédéterminé de l'infrastructure (2), d'un serveur VPN (22) associé à la pluralité d'unités (1a, 1b),
- établissement (TUNN) d'un tunnel (24a, 24b) de chiffrement entre le serveur VPN (22) et le client VPN (16) de chaque unité (1a, 1b) à partir des données de topologie correspondantes,
- création et mémorisation (ROUT) de données de routage représentatives d'une règle de routage de données entre les tunnels (24a, 24b) de chiffrement établis.

2. Procédé selon la revendication 1, dans lequel lesdites données de topologie comprennent au moins une adresse IP publique, chaque adresse IP publique identifiant une passerelle (Pa, Pb1, Pb2) du réseau local (Ra, Rb) correspondant depuis le réseau public (I).

3. Procédé selon l'une des revendications 1 et 2, dans lequel l'étape d'envoi (SNDTOP) est réalisée périodiquement.

4. Procédé selon l'une des revendications 1 à 3, comprenant une authentification de l'unité (1a, 1b) auprès de l'infrastructure (2) au moyen d'un premier certificat numérique mémorisé par l'unité d'interconnexion avant son installation dans un réseau local.

5. Procédé selon la revendication 4, dans lequel le tunnel de chiffrement entre l'unité (1a, 1b) et l'infrastructure (2) est établi au moyen d'un deuxième certificat numérique différent du premier certificat numérique et généré suite à l'authentification de l'unité d'interconnexion auprès de l'infrastructure.

6. Procédé selon la revendication 5, dans lequel la génération du deuxième certificat numérique est mise en oeuvre par une entité extérieure à l'infrastructure (2).

7. Procédé selon la revendication 6, comprenant une authentification de l'infrastructure (2) auprès de l'entité extérieure (PKI) au moyen d'un troisième certificat numérique différent des premier et deuxième certificats numériques.

8. Procédé selon la revendication 7, dans lequel l'authentification auprès de l'entité extérieure est initiée par un contrôleur de l'infrastructure distinct du serveur entremetteur.

9. Procédé selon l'une des revendications 7 et 8, dans lequel il est utilisé un troisième certificat numérique différent pour chaque serveur entremetteur.

10. Procédé selon l'une des revendications 1 à 9, dans lequel l'étape d'établissement (TUNN) d'un tunnel de chiffrement comprend les sous-étapes de :
- création (STUN) de plusieurs sous-tunnels (241b, 242b) de chiffrement, chaque sous-tunnel (241b, 242b) correspondant à une route passant par une passerelle d'accès (Pb1, Pb2) spécifique d'un réseau local (Rb), et
- agrégation (AGR) des sous-tunnels (241b, 242b) en un tunnel (24b) de chiffrement.

11. Procédé selon l'une des revendications 1 à 10, dans lequel le serveur entremetteur (20) réalisant l'instanciation du serveur VPN (22) est déterminé (TGRP) par un identifiant de groupe d'unités interconnectables contenu dans les messages de connexion.

12. Procédé selon l'une des revendications 1 à 11, dans lequel un contrôleur de l'infrastructure détecte une défaillance de serveur entremetteur et commande la ré-instanciation d'un serveur entremetteur détecté comme défaillant.

13. Infrastructure (2) d'interconnexion pour établir un réseau privé virtuel entre plusieurs réseaux locaux (Ra, Rb) comprenant chacun au moins une passerelle (Pa, Pb1, Pb2) d'accès à un réseau public (I), l'infrastructure (2) comprenant :
- au moins un serveur entremetteur (20), le ou chaque serveur entremetteur (20) comprenant des moyens d'instanciation d'au moins un serveur VPN (22) adapté pour établir au moins un tunnel (24a, 24b) de chiffrement avec au moins un client VPN (16) localisé dans un réseau local (Ra, Rb) distant,
- un contrôleur (26) adapté pour transmettre une requête d'instanciation de serveur VPN (22) au serveur entremetteur (20) au moins prévu sur réception de données de topologie identifiant au moins une passerelle (Pa, Pb1, Pb2) d'accès à un réseau public (I) dans un réseau local distant (Ra, Rb),
- un routeur (25) connecté au réseau public (I), au serveur entremetteur (20) au moins prévu et au contrôleur (26), et comprenant des moyens de routage de données entre chaque serveur VPN (22) instancié par le serveur entremetteur (20) au moins prévu et des clients VPN (16) localisés dans des réseaux locaux (Ra, Rb) distants.

14. Unité (1a, 1b) d'interconnexion destinée à être connectée dans un réseau local (Ra, Rb) comprenant au moins une passerelle (Pa, Pb1, Pb2) d'accès à un réseau public (I) pour établir un réseau privé virtuel avec au moins un autre réseau local distant ayant également accès au réseau public (I), l'unité (1a, 1b) comprenant :
- un module de traitement de données (10) adapté pour générer des messages de connexion,
- Un module de communication réseau (12) adapté pour communiquer les messages de connexion à une infrastructure (2) d'interconnexion selon la revendication 13 par l'intermédiaire de chaque passerelle (Pa, Pb1, Pb2) d'accès du réseau local (Ra, Rb), et
- un client VPN (16) pour établir au moins un tunnel (24a, 24b) de chiffrement avec un serveur VPN (22) distant.

15. Système d'interconnexion pour établir un réseau privé virtuel entre au moins deux réseaux locaux (Ra, Rb), le système comprenant une infrastructure (2) selon la revendication 13 et aux moins deux unités (1a, 1b) selon la revendication 14, dans lequel chaque unité (1a, 1b) comprend un module de stockage (14) d'un identifiant de groupe d'unités interconnectables, chaque serveur entremetteur (20) de l'infrastructure (2) étant associé à un identifiant de groupe spécifique.

## Patentansprüche

1. Verfahren zum Herstellen eines virtuellen privaten Netzwerks zwischen lokalen Netzwerken (Ra, Rb), wobei jedes lokale Netzwerk (Ra, Rb) mindestens ein Gateway (Pa, Pb1, Pb2) für den Zugriff auf ein öffentliches Netzwerk (I) und eine Einheit (1a, 1b) umfasst, die einen VPN-Client (16) umfasst, wobei das Verfahren die folgenden Schritte umfasst, die bei jedem Einschalten einer Einheit (1a, 1b) durchgeführt werden;
- Senden (SNDTOP) durch die Einheit (1a, 1b) von mindestens einer Verbindungsnachricht an eine Infrastruktur (2), die mit dem öffentlichen Netzwerk (I) verbunden ist, und mindestens einen Vermittlungs-Server (20) umfassend, wobei jede Verbindungsnachricht durch ein jeweiliges Gateway (Pa, Pb1, Pb2) des lokalen Netzwerks (Ra, Rb) hindurchführt,
- Empfangen (RCVTOP) durch die Infrastruktur (2) jeder Verbindungsnachricht und Bestimmen von Topologie-Daten, die jedes Gateway (Pa, Pb1, Pb2) des lokalen Netzwerks (Ra, Rb) identifizieren, in dem die Einheit (1a, 1b) platziert ist,
wobei das Verfahren weiter die folgenden Schritte umfasst, die für eine Vielzahl von Einheiten (1a, 1b) durchgeführt werden:
- Anführen (INITVPN) durch einen vorbestimmten Vermittlungs-Server (20) der Infrastruktur (2) eines VPN-Servers (22), welcher der Vielzahl von Einheiten (1a, 1b) zugeordnet ist,
- Herstellen (TUNN) eines Verschlüsselungstunnels (24a, 24b) zwischen dem VPN-Server (22) und dem VPN-Client (16) jeder Einheit (1a, 1b) aus den entsprechenden Topologie-Daten,
- Erstellen und Speichern (ROUT) von repräsentativen Routingdaten für eine Routingregel von Daten zwischen den hergestellten Verschlüsselungstunnels (24a, 24b).

2. Verfahren nach Anspruch 1, wobei die Topologie-Daten mindestens eine öffentliche IP-Adresse umfassen, wobei jede öffentliche IP-Adresse ein Gateway (Pa, Pb1, Pb2) des entsprechenden lokalen Netzwerks (Ra, Rb) aus dem öffentlichen Netzwerk (I) identifiziert.

3. Verfahren nach einem der Ansprüche 1 und 2, wobei der Sendeschritt (SNDTOP) regelmäßig durchgeführt wird.

4. Verfahren nach einem der Ansprüche 1 bis 3, umfassend eine Authentifizierung der Einheit (1a, 1b) bei der Infrastruktur (2) anhand eines ersten digitalen Zertifikats, welches durch die Vernetzungseinheit vor dessen Installation in ein lokales Netzwerk gespeichert wird.

5. Verfahren nach Anspruch 4, wobei der Verschlüsselungstunnel zwischen der Einheit (1a, 1b) und der Infrastruktur (2) anhand eines zweiten Authentifizierungszertifikats hergestellt wird, welches sich von dem ersten Authentifizierungszertifikat unterscheidet, und im Anschluss an die Authentifizierung der Vernetzungseinheit bei der Infrastruktur erzeugt wird.

6. Verfahren nach Anspruch 5, wobei das Erzeugen des zweiten digitalen Zertifikats durch eine Entität außerhalb der Infrastruktur (2) umgesetzt wird.

7. Verfahren nach Anspruch 6, umfassend eine Authentifizierung der Infrastruktur (2) bei der äußeren Entität (PKI) anhand eines dritten digitalen Zertifikats, welches sich von dem ersten und zweiten Authentifizierungszertifikat unterscheidet.

8. Verfahren nach Anspruch 7, wobei die Authentifizierung bei der der äußeren Entität durch eine Steuerung der Infrastruktur initiiert wird, die von dem Vermittlungs-Server verschieden ist.

9. Verfahren nach einem der Ansprüche 7 und 8, wobei ein drittes digitales Zertifikat verwendet wird, welches für jeden Vermittlungs-Server unterschiedlich ist.

10. Verfahren nach einem der Ansprüche 1 bis 9, wobei der Schritt zum Herstellen (TUNN) eines Verschlüsselungstunnels die folgenden Unterschritte umfasst:
- Herstellen (STUN) mehrerer Unter-Verschlüsselungstunnels (241a, 242b), wobei jeder Unter-Verschlüsselungstunnel (241a, 242b) einer Route entspricht, welche durch ein spezielles Gateway (Pb1, Pb2) für den Zugriff auf ein lokales Netzwerk (Rb) führt, und
- Aggregieren (AGR) der Unter-Tunnels (241a, 242b) in einen Verschlüsselungstunnel (24b).

11. Verfahren nach einem der Ansprüche 1 bis 10, wobei der Vermittlungs-Server (20), der das Anführen des VPN-Servers (22) durchführt, durch eine Gruppenidentifizierung von vernetzbaren Einheiten bestimmt (TGRP) wird, welche in den Verbindungsnachrichten enthalten ist.

12. Verfahren nach einem der Ansprüche 1 bis 11, wobei eine Steuerung der Infrastruktur einen Ausfall eines Vermittlungs-Servers detektiert und das Wieder-Anführen eines als ausgefallen detektierten Vermittlungs-Servers ansteuert.

13. Infrastruktur (2) zum Vernetzen, zum Herstellen eines virtuellen privaten Netzwerks zwischen lokalen Netzwerken (Ra, Rb), jeweils mindestens ein Gateway (Pa, Pb1, Pb2) für den Zugriff auf ein öffentliches Netzwerk (I) umfassend, wobei die Infrastruktur (2) umfasst:
- mindestens einen Vermittlungs-Server (20), wobei der oder jeder Vermittlungs-Server (20) Mittel zum Anführen mindestens eines VPN-Servers (22) umfasst, der angepasst ist, um mindestens einen Verschlüsselungstunnel (24a, 24b) mit mindestens einem VPN-Client (16) herzustellen, der sich in einem entfernten lokalen Netzwerk (Ra, Rb) befindet,
- eine Steuerung (26), die angepasst ist, um eine Anfrage zum Anführen eines VPN-Servers (22) an den Vermittlungs-Server (20) zu übertragen, welcher zumindest beim Empfangen von Topologie-Daten, welche mindestens ein Gateway (Pa, Pb1, Pb2) für den Zugriff auf ein öffentliches Netzwerk (I) in einem entfernten lokalen Netzwerk (Ra, Rb) identifizieren, vorgesehen ist,
- einen Router (25), welcher mit dem öffentlichen Netzwerk (I), mit dem mindestens vorgesehenen Vermittlungs-Server (20) und der Steuerung (26) verbunden ist, und Mittel zum Routen von Daten zwischen jedem VPN-Server (22) umfassend, der durch den mindestens vorgesehenen Vermittlungs-Server (20) angeführt wird, und VPN-Clients (16), wie sich in den entfernten lokalen Netzwerken (Ra, Rb) befinden.

14. Einheit (1a, 1b) zum Vernetzen, welche dazu bestimmt ist, in einem lokalen Netzwerk (Ra, Rb) verbunden zu werden, mindestens ein Gateway (Pa, Pb1, Pb2) für den Zugriff auf ein öffentliches Netzwerk (I) umfassend, um ein virtuelles privates Netzwerk mit mindestens einem anderen entfernten lokalen Netzwerk herzustellen, welches ebenfalls einen Zugriff auf das öffentliche Netzwerk (I) aufweist, wobei die Einheit (1a, 1b) umfasst:
- ein Datenverarbeitungsmodul (10), welches angepasst ist, um Verbindungsnachrichten zu erzeugen,
- ein Netzwerkkommunikationsmodul (12), welches angepasst ist, um die Verbindungsnachrichten einer Infrastruktur (2) zum Vernetzen nach Anspruch 13 über jedes Gateway (Pa, Pb1, Pb2) für den Zugriff auf ein lokales Netzwerk (Ra, Rb) zu kommunizieren, und
- einen VPN-Client (16) zum Herstellen von mindestens einem Verschlüsselungstunnel (24a, 24b) mit einem entfernten VPN-Server (22).

15. Vernetzungssystem zum Herstellen eines virtuellen privaten Netzwerks zwischen mindestens zwei lokalen Netzwerken (Ra, Rb), wobei das System eine Infrastruktur (2) nach Anspruch 13 und mindestens zwei Einheiten (1a, 1b) nach Anspruch 14 umfasst, wobei jede Einheit (1a, 1b) ein Ablagemodul (14) für eine Gruppenidentifizierung von vernetzbaren Einheiten umfasst, wobei jeder Vermittlungs-Server (20) der Infrastruktur (2) einer speziellen Gruppenidentifizierung zugeordnet ist.

## Claims

1. A method for establishing a virtual private network between local area networks (Ra, Rb), each local area network (Ra, Rb) comprising at least one access gateway (Pa, Pb1, Pb2) to a public network (I) and one unit (1a, 1b) comprising a VPN client (16), the method comprising the following steps carried out each time a unit (1a, 1b) is powered on:
- sending (SNDTOP) by the unit (1a, 1b) of at least one connection message to an infrastructure (2) connected to the public network (I) and comprising at least one intermediate server (20), each connection message transiting via a respective gateway (Pa, Pb1, Pb2) of the local area network (Ra, Rb),
- receiving (RCVTOP), by the infrastructure (2) each connection message and determination of topology data identifying each gateway (Pa, Pb1, Pb2) of the local area network (Ra, Rb) in which the unit (1a, 1b) is placed,
the method further comprising the following steps carried out for a plurality of units (1a, 1b):
- instancing (INITVPN), by a predetermined intermediate server (20) of the infrastructure (2), of a VPN server (22) associated with the plurality of units (1a, 1b),
- establishing (TUNN) an encryption tunnel (24a, 24b) between the VPN server (22) and the VPN client (16) of each unit (1a, 1b) from the corresponding topology data,
- creating and storing (ROUT) routing data representative of a data routing rule between the established encryption tunnels (24a, 24b).

2. The method according to Claim 1, wherein said topology data comprise at least one public IP address, each public IP address identifying a gateway (Pa, Pb1, Pb2) of the corresponding local area network (Ra, Rb) from the public network (I).

3. The method according to any one of Claims 1 and 2, wherein the sending step (SNDTOP) is carried out periodically.

4. The method according to any one of Claims 1 to 3, comprising an authentication of the unit (1a, 1b) with the infrastructure (2) by means of a first digital certificate stored by the interconnection unit prior to its installation in a local area network.

5. The method according to Claim 4, wherein the encryption tunnel between the unit (1a, 1b) and the infrastructure (2) is established by means of a second digital certificate different to the first digital certificate and generated following authentication of the interconnection unit with the infrastructure.

6. The method according to Claim 5, wherein generation of the second digital certificate is executed by an entity external to the infrastructure (2).

7. The method according to Claim 6, comprising an authenticating of the infrastructure (2) with the external entity (PKI) by means of a third digital certificate different to the first and second digital certificates.

8. The method according to Claim 7, wherein the authenticating with the external entity is initiated by a controller of the infrastructure separate from the intermediate server.

9. The method according to any one of Claims 7 and 8, wherein a different third digital certificate is used for each intermediate server.

10. The method according to any one of Claims 1 to 9, wherein establishing (TUNN) an encryption tunnel comprises the sub-steps of:
- creating (STUN) several encryption sub-tunnels (241b, 242b), each sub-tunnel (241b, 242b) corresponding to a route passing through a specific access gateway (Pb1, Pb2) of a local area network (Rb), and
- aggregating (AGR) the sub-tunnels (241b, 242b) into an encryption tunnel (24b).

11. The method according to any one of Claims 1 to 10, wherein the intermediate server (20) performing the instancing of the VPN server (22) is determined (TGRP) by a group identifier of interconnectable units contained in the connection messages.

12. The method according to any one of Claims 1 to 11, wherein a controller of the infrastructure detects a malfunction of the intermediate server and controls the re-instancing of an intermediate server detected as faulty.

13. Interconnection infrastructure (2) for establishing a virtual private network between several local area networks (Ra, Rb) each comprising at least one access gateway (Pa, Pb1, Pb2) to a public network (I), the infrastructure (2) comprising:
- at least one intermediate server (20), the or each intermediate server (20) comprising instancing means of at least one VPN server (22) adapted to establish at least one encryption tunnel (24a, 24b) with at least one VPN client (16) located in a remote local area network (Ra, Rb),
- a controller (26) adapted to transmit an instancing request of a VPN server (22) to the intermediate server (20) at least provided on reception of topology data identifying at least one access gateway (Pa, Pb1, Pb2) to a public network (I) in a remote local area network (Ra, Rb),
- a router (25) connected to the public network (I), to the intermediate server (20) at least provided and to the controller (26), and comprising data routing means between each VPN server (22) instanced by the intermediate server (20) at least provided and VPN clients (16) located in remote local area networks (Ra, Rb).

14. An interconnection unit (1a, 1b) intended to be connected in a local area network (Ra, Rb) comprising at least one access gateway (Pa, Pb1, Pb2) to a public network (I) for establishing a virtual private network with at least one other remote local area network also having access to the public network (I), the unit (1a, 1b) comprising:
- a data-processing module (10) adapted to generate connection messages,
- a network communication module (12) adapted to communicate the connection messages to an interconnection infrastructure (2) according to Claim 13 by means of each access gateway (Pa, Pb1, Pb2) of the local area network (Ra, Rb), and
- a VPN client (16) for establishing at least one encryption tunnel (24a, 24b) with a remote VPN server (22).

15. An interconnection system for establishing a virtual private network between at least two local area networks (Ra, Rb), the system comprising an infrastructure (2) according to Claim 13 and at least two units (1a, 1b) according to Claim 14, wherein each unit (1a, 1b) comprises a storage module (14) of a group identifier of interconnectable units, each intermediate server (20) of the infrastructure (2) being associated with a specific group identifier.
